## Europäisches Patentamt
## European Patent Office
## Office européen des brevets

(19)

(11) Numéro de publication: **0 026 133**
**B1**

(12)

# FASCICULE DE BREVET EUROPEEN

(45) Date de publication du fascicule du brevet: **15.02.84**

(51) Int. Cl.³: **H 04 N 5/40**

(21) Numéro de dépôt: **80401309.2**

(22) Date de dépôt: **12.09.80**

(54) Dispositif d'amplification de puissance d'un signal composite de télévision.

(30) Priorité: **19.09.79 FR 7923338**

(43) Date de publication de la demande:
**01.04.81 Bulletin 81/13**

(45) Mention de la délivrance du brevet:
**15.02.84 Bulletin 84/7**

(84) Etats contractants désignés:
**AT BE CH DE GB IT LI LU NL SE**

(56) Documents cités:
**FR - A - 2 392 540**

(73) Titulaire: **L.G.T. LABORATOIRE GENERAL DES TELECOMMUNICATIONS**
**51, boulevard de la République**
**F-78400 Chatou (FR)**

(72) Inventeur: **Chemin, Henri**
**"THOMSON-CSF" SCPI 173, bld Haussmann**
**F-75360 Paris Cedex 08 (FR)**
Inventeur: **Cluniat, Claude**
**"THOMSON-CSF" SCPI 173, bld Haussmann**
**F-75360 Paris Cedex 08 (FR)**
Inventeur: **Beltzer, Bernard**
**"THOMSON-CSF" SCPI 173, bld Haussmann**
**F-75360 Paris Cedex 08 (FR)**

(74) Mandataire: **Turlèque, Clotilde et al,**
**THOMSON-CSF SCPI 173, Bld Haussmann**
**F-75379 Paris Cedex 08 (FR)**

Dispositif d'amplification de puissance d'un signal composite de télévision

La présente invention concerne les dispositifs d'amplification de puissance de signaux modulés en amplitude, en particulier dans les émetteurs et réémetteurs de télévision qui présentent un rendement, une linéarité et une fiabilité accrus grâce à l'amplification séparée des signaux modulés à porteuse réduite et de signal porteur seul.

Tout émetteur à modulation d'amplitude doit satisfaire à des conditions de linéarité sévères de l'amplitude du signal modulé par rapport à celle du signal de modulation.

Il en résulte un rendement global en crête très modeste de tels émetteurs, et en particulier une limitation sévère de la puissance maximale possible des amplificateurs réalisés en version transistorisée.

Il est connu par la demande de brevet européen n° 00 10 023 intitulée "Système de transmission en modulation d'amplitude à haute performance et émetteur et réémetteur comportant un tel système", déposée au nom du demandeur, de réaliser un système où les signaux vidéofréquences à transmettre sont appliqués à un modulateur du type modulateur en anneau délivrant un signal modulé à porteuse réduite en fréquence intermédiaire; ce signal est ensuite transposé sur la fréquence finale et amplifié en puissance dans des amplificateurs en classe AB. Par ailleurs le signal porteur ayant servi à la modulation est ensuite lui-même transposé et amplifié en puissance dans une chaîne séparée, où l'amplification est réalisée cette fois en classe C donc à très haut rendement.

La demande ci-dessus citée montre comment on réalise ainsi un émetteur de signal de télévision standard avec un rendement, une linéarité et une fiabilité nettement accrus par rapport aux systèmes classiques.

Toutefois l'expérience montre qu'un tel système pose quelques problèmes à l'exploitation.

En effet, dans un tel système, de la modulation à l'amplification finale, il est fait usage de signaux non normalisés, c'est-à-dire de signaux à porteuse réduite qui rendent les opérations de maintenance différentes de ce qu'elles sont dans les émetteurs classiques. De plus, certaines instabilités se manifestent du fait que la recombinaison des signaux recueillis en sortie des deux chaînes d'amplification séparées est éloignée d'un grand nombre d'étages des dispositifs qui leur ont donné naissance.

La présente invention a pour but de pallier ces inconvénients tout en gardant intégralement les avantages ci-dessus cités, amplification séparée d'un signal porteur pur et d'un signal porteur modulé à niveau réduit, en conservant des signaux normalisés dans les étages à fréquence intermédiaire.

Selon l'invention, un dispositif d'amplification de puissance d'un signal composite de télévision comprenant au moins un signal porteur à la fréquence d'émission modulé par une information vidéofréquence, est caractérisé en ce qu'il comporte une entrée de signal porteur modulé, une entrée de signal porteur non modulé, des premiers moyens de génération couplés à l'entrée de signal modulé et à l'intrée de signal non modulé délivrant sur une sortie un signal porteur modulé à niveau réduit, des seconds moyens de génération couplés à l'entrée de signal porteur non modulé ayant une sortie délivrant le signal porteur pur, des moyens d'amplification comportant un premier amplificateur ayant une entrée couplée à la sortie des premiers moyens de génération et un deuxième amplificateur ayant une entrée couplée à la sortie des seconds moyens de génération, pour amplifier séparément le signal porteur modulé à niveau réduit et le signal porteur pur, et des moyens de combinaison ayant deux entrées reliées aux sorties des amplificateurs et une sortie pour fournir le signal porteur modulé amplifié à émettre.

L'invention sera mieux comprise et d'autres caractéristiques apparaîtront à l'aide de la description ci-après et des dessins s'y rapportant sur lesquels:

— la figure 2 est un diagramme explicatif;

— la figure 3 représente une variante du dispositif d'amplification selon l'invention.

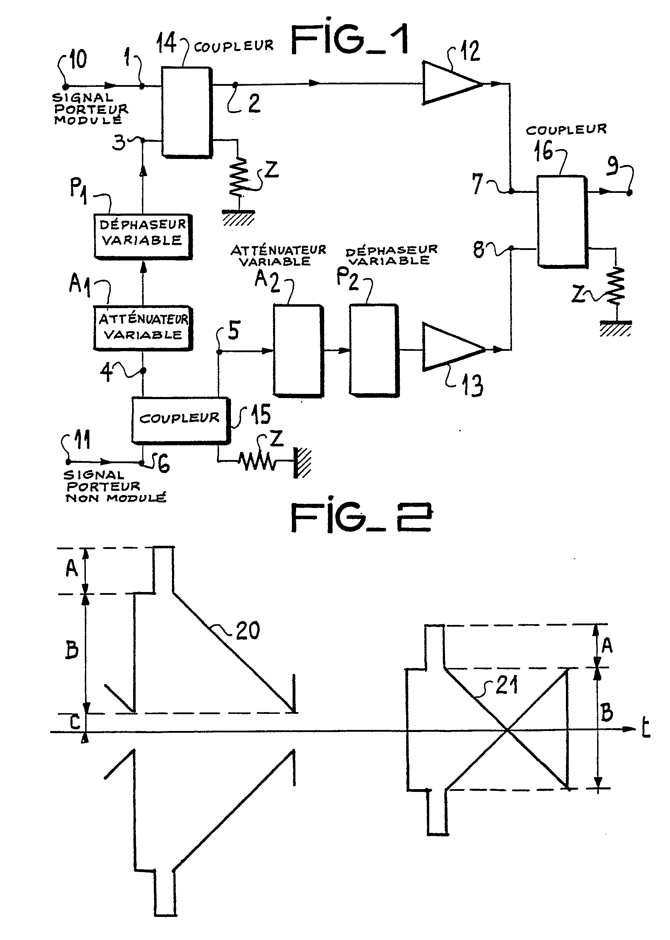

Sur la figure 1, une borne 10, destinée à recevoir un signal porteur haute fréquence modulé par des signaux vidéofréquences, est connectée à l'accès 1 d'une première paire d'accès conjugués d'un coupleur hybride 3 dB, 14, dont le deuxième accès 3 est connecté à la sortie d'un déphaseur variable $P_1$. Un des accès de la deuxième paire d'accès conjugués du coupleur 14 est relié à une impédance de charge Z et l'autre, 2, connecté à l'entrée d'un amplificateur 12 de gain G et dont la sortie alimente l'accès 7 de la première paire d'accès conjugués d'un deuxième coupleur hybride 3 dB, 16, dont le deuxième accès 8 est relié à la sortie d'un amplificateur 13 de même gain G. L'un des accès de la deuxième paire d'accès conjugués du coupleur 16 est connecté à une impédance de charge Z et l'autre à la borne de sortie 9 du dispositif d'amplification. Une deuxième borne d'entrée 11 destinée à recevoir le signal porteur non modulé est connectée à un accès 6 d'une première paire d'accès conjugués d'un coupler hybride 3 dB, 15, dont l'autre accès est connecté à une impédance de charge Z. Les accès 4 et 5 de la deuxième paire d'accès conjugués de ce coupleur sont connectés respectivement à l'entrée du déphaseur variable $P_1$ à travers un atténuateur variable $A_1$ et à l'entrée de l'amplificateur 13 à travers un atténuateur variable $A_2$ suivi d'un déphaseur variable $P_2$.

Les coupleurs 14, 15 et 16 sont supposés avoir des accès de même impédance Z.

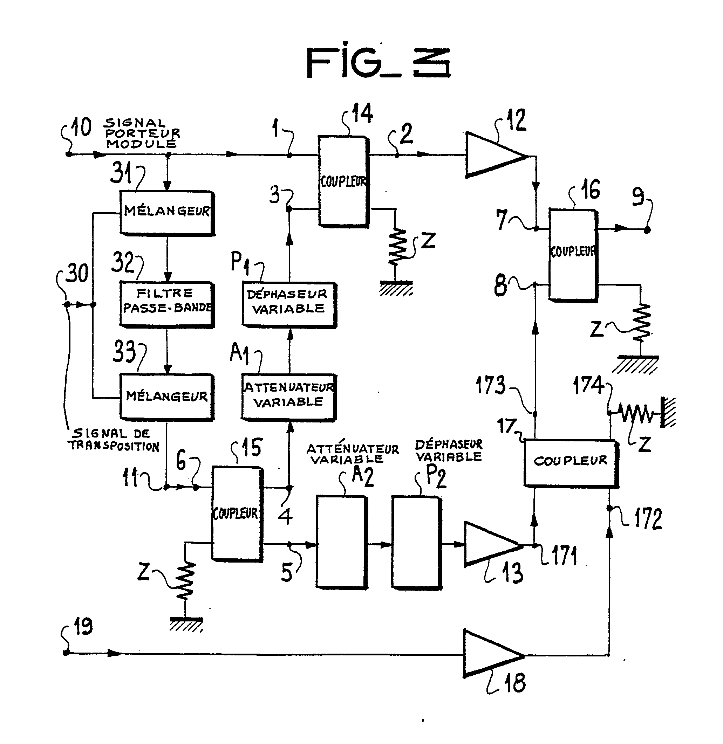

Le fonctionnement sera décrit à l'aide de la figure 2 où la courbe 20 représente en fonction du temps t l'enveloppe d'un signal porteur modulé négativement par un signal vidéofréquence d'un niveau crête standard de 1 volt, c'est-à-dire que $A + B + C = 1$ volt, où A est le niveau d'impulsion de synchronisation, soit $A = 0,25$ volt, B l'écart de niveau entre le noir et le blanc absolus, soit $B = 0,65$ volt, et C le niveau de porteur minimal, $C = 0,1$ volt. La courbe 21 représente le même signal après combinaison en opposition de phase avec un signal porteur de niveau

$$\frac{B}{2} + C = 0,425 \text{ volt,}$$

d'où résulte un nouveau niveau de crête égal à

$$A + \frac{B}{2} = 0,575 \text{ volt.}$$

Le signal représenté par la courbe 21 et le signal porteur pur sont respectivement amplifiés par l'amplificateur 12 fonctionnant en classe AB et l'amplificateur 13 fonctionnant en classe C. L'ensemble constitué de ces deux amplificateurs 12 et 13 ainsi que du coupleur 16, utilisé ici en sommateur, est semblable à celui utilisé dans la demande de brevet susmentionnée et en présente toutes les caractéristiques et avantages exposés en détail dans cette demande, notamment lorsque le niveau de porteur réduit est choisi de manière à obtenir des niveaux de blanc et de noir absolus identiques, comme dans le cas du signal représenté par la courbe 21.

Mais la formation du signal modulé à niveau de porteur réduit est obtenue, dans le cas de la figure 1, à partir du signal porteur non modulé, appliqué à la borne d'entrée 11, et du signal modulé standard présent à la borne d'entrée 10 du dispositif d'amplification. Le signal porteur HF non modulé est lui-même obtenu en prélevant une partie du signal HF modulé et en supprimant les bandes latérales. Le dispositif correspondant n'est pas représenté sur la figure 1. Le signal porteur non modulé présent sur la borne 11 est séparé par le coupler 15, en deux signaux de même puissance respectivement appliqués au coupleur 14, utilisé en soustracteur algébrique via $A_1$ et $P_1$, et à l'amplificateur 13, via $A_2$ et $P_2$.

Il va être montré les propriétés particulières de cette disposition.

Soit M le signal modulé négativement par le signal standard vidéofréquence tel que représenté par la courbe 20 de la figure 2, et appliqué, avec un niveau de crête de 1 volt pris comme référence, à la borne d'entrée 10 du dispositif d'amplification de la figure 1. Ce signal, présent à l'entrée 1 du coupleur 14, est pris comme référence de phase, il est alors écrit: $M_1 = M \underline{/0}$.

A la sortie de ce même coupleur, le signal M devient

$$M_2 = \frac{\sqrt{2}}{2} M \underline{/0}$$

car seront, pour l'instant, négligées, les rotations de phase dues aux connexions.

Soit C le signal porteur non modulé extrait du signal M et supposé appliqué à la borne d'entrée 11 avec un niveau de crête de 1 volt.

A la borne d'entrée 6 du coupleur 15 le signal C aura une phase quelconque $\varphi$ par rapport à M, on peut écrire alors

$$C_6 = C \underline{/\varphi}$$

A la sortie 4 du coupleur 15 le signal C garde la même phase mais est atténué de 3 dB d'où

$$C_4 = \frac{\sqrt{2}}{2} C \underline{/\varphi}$$

et après passage dans l'atténuateur $A_1$ et le déphaseur $P_1$, il sera affecté respectivement d'un coefficient d'atténuation $\alpha_1$ et d'un retard de phase $\varphi_1$, d'où à l'entrée 3 du coupleur 14 un signal $C_3$ tel que

$$C_3 = \frac{\sqrt{2}}{2} \alpha_1 C \underline{/\varphi - \varphi_1}$$

A la sortie 2 du coupleur 14 le signal C subit une nouvelle atténuation de 3 dB et un retard de

$$\frac{\pi}{2} \quad \text{d'où} \quad C_2 = \frac{\alpha_1}{2} C \underline{/\varphi - \varphi_1 - \frac{\pi}{2}}$$

Le signal résultant R fourni par le coupleur 14 sur sa borne de sortie 2 sera

$$R_2 = M_2 + C_2$$

$$= \frac{\sqrt{2}}{2} M \underline{/0} + \frac{\alpha_1}{2} C \underline{/\varphi - \varphi_1 - \frac{\pi}{2}}$$

Pour obtenir le signal représenté par la courbe 21 de la figure 2, le coupleur 14 doit jouer le rôle d'un soustracteur algébrique, pour cela il faut que

$$\varphi - \varphi_1 - \frac{\pi}{2} = \pi \quad \text{d'où} \quad \varphi_1 = \varphi + \frac{\pi}{2}$$

soit le retard de phase à donner au déphaseur $P_1$.

Il faut également que les amplitudes de C et de M soient dans le même rapport d'amplitude crête que 1 volt par rapport à

$$1 - (A + \frac{B}{2})$$

volt, soit

$$\frac{1}{1 - 0,575} = 2,35$$

d'où

$$\frac{\sqrt{2}}{\alpha_1} = 2,35,$$

et $\alpha_1 = 0,6$, soit 4,4 dB.

Avec ces réglages de $A_1$ et $P_1$, on peut alors écrire une nouvelle valeur $R'_2$ de $R_2$:

$$R'_2 = \frac{\sqrt{2}}{2} M \underline{/O} + 0,3 C \underline{/\pi}$$

Par ailleurs sur la sortie 5 du coupleur 15 on obtient un signal $C_5$ retardé de

$$\frac{\pi}{2}$$

et diminué de 3 dB par rapport à $C_6$ savoir:

$$C_5 = \frac{\sqrt{2}}{2} C \underline{/\varphi - \frac{\pi}{2}}$$

Soit $\alpha_2$ le coefficient d'atténuation de l'atténuateur $A_2$, $\varphi_2$ le retard de phase de $P_2$ et G le gain commun des amplificateurs 12 et 13, le signal C devient à l'entrée 8 du coupleur 16:

$$C_8 = G \frac{\sqrt{2}}{2} \alpha_2 C \underline{/\varphi - \varphi_2 - \frac{\pi}{2}}$$

Ce, dernier atteint la borne de sortie 9 après une atténuation de 3 dB et un retard de phase de

$$\frac{\pi}{2}$$

d'où

$$C_9 = G \frac{\alpha_2}{2} C \underline{/\varphi - \varphi_2 - \pi}$$

En ce même point parvient le signal résultant R qui, à partir de la sortie 2 du coupleur 14 garde, par hypothèse, la même phase mais est amplifié du coefficient G par l'amplificateur 12 et atténué de 3 dB par le coupleur 16 d'où

$$R_9 = G \frac{M}{2} \underline{/O} + \frac{\alpha_1 G}{2\sqrt{2}} C \underline{/\varphi - \varphi_1 - \frac{\pi}{2}}$$

Le nouveau signal résultant S obtenu à la sortie du dispositif sera

$$S = C_9 + R_9$$

$$= G \frac{M}{2} \underline{/O} + G \frac{\alpha_2}{2} C \underline{/\varphi - \varphi_2 - \pi} + \frac{\alpha_1 G}{2\sqrt{2}} C$$

$$\underline{/\varphi - \varphi_1 - \frac{\pi}{2}}$$

Pour obtenir

$$S = G \frac{M}{2} \underline{/O},$$

c'est-à-dire un signal identique au signal modulé présenté au dispositif amplificateur, au niveau près, il suffit de faire

$$\frac{\alpha_2}{2} = \frac{\alpha_1}{2\sqrt{2}} \quad \text{c'est-à-dire} \quad \alpha_1 = \alpha_2 \sqrt{2}$$

donc que les deux atténuateurs soient différents de 3 dB, ainsi que:

$$(\varphi - \varphi_2 - \pi) - (\varphi - \varphi_1 - \frac{\pi}{2}) = \pi$$

c'est-à-dire $\varphi_2 - \varphi_1 = \frac{\pi}{2}$

Il est intéressant de noter que ce résultat est obtenu indépendamment de l'amplitude de C et de sa phase $\varphi$ d'origine par rapport au signal modulé M.

Cette insensibilité du taux de modulation du signal résultant aux variations d'amplitude et de phase relatives, vient du fait que le montage de la figure 1 se comporte comme un pont équilibré; lorsque ces variations se produisent, elles affectent seulement le point de croisement, c'est-à-dire d'inversion de phase du porteur sur le signal représenté par la courbe 21.

En effet, il vient d'être vu que le signal 21 tel que représenté n'est obtenu que si

$$\varphi_1 = \varphi + \frac{\pi}{2}$$

donc fonction de $\varphi$ et si $A_1$ a une valeur bien déterminée de 4,4 dB, ce qui fige la valeur de C.

Les valeurs de $A_1$ et $A_2$ étant maintenant déterminées, l'atténuateur de plus faible valeur, $A_1$, peut évidemment être supprimé à condition de baisser de la même valeur le niveau C, c'est-à-dire de 4,4 dB. L'atténuateur $A_2$ atténuera alors seulement de 3 dB au lieu de 7,4 dB.

Bien entendu, en pratique, les valeurs de retard de phase calculées doivent être modifiées en fonction des rotations de phase dues aux éléments du montage.

D'autre part, les expérimentations ont montré qu'un léger décalage de phase systématique entre les signaux M et C, c'est-à-dire de $\varphi$ par rapport à $\varphi_1$, permettrait d'éliminer les légères variations de gain différentiel produites au point de croisement dans l'amplificateur 12 du fait du déblocage des transistors de puissance en classe AB.

La figure suivante montre une variante de la figure précédente où un exemple de dispositif de filtrage du signal porteur non modulé est représenté ainsi que la prise en compte d'une voie d'amplification de signaux audiofréquences.

Sur la figure 3, où les mêmes repères que sur la figure 1 concernent les mêmes organes utilisés de la même manière, la borne d'entrée 11 est reliée à la sortie d'un mélangeur 33 dont l'entrée est connectée à la borne 10 à travers un filtre de bande 32 précédé d'un mélangeur 31. Les mélangeurs 31 et 33 ont chacun une deuxième entrée connectée à la borne d'entrée. 30. En outre, la sortie de l'amplificateur 13 est ici couplée au coupleur 16 à travers les accès 171 et 173 d'un quatrième coupleur 17 dont l'accès 174 est connecté à une impédance de charge Z et l'accès 172 est relié à la sortie d'un amplificateur de puissance 18 dont l'entrée reçoit, à travers une borne 19, un signal porteur modulé par des signaux audiofréquences.

Le signal porteur non modulé est isolé dans le filtre 32 qui est un filtre passe bande étroit, à quartz, centré sur une fréquence intermédiaire égale à celle utilisée pour la modulation des signaux vidéofréquences. Le signal de transposition appliqué à la borne 30 est un signal de fréquence égale à celle du signal porteur vidéofréquence plus ou moins la fréquence intermédiaire, il peut être fourni soit par un générateur extérieur piloté par quartz, soit par le générateur de transposition de l'émetteur auquel est associé le dispositif d'amplification.

Le coupleur 17 symbolise la réalisation d'un diplexeur classique comportant deux coupleurs 3 dB en série avec un système de protection sur la différence des fréquences porteuses additionnées par ce diplexeur, ce qui permet d'éviter pratiquement toutes pertes sur chacune des composantes.

La réalisation du couplage des signaux audiofréquences en amont du coupleur 16, plutôt qu'à la sortie 9 du coupler 16 permet d'éviter de perturber le temps de retard de groupe dans la voie modulée par les signaux audiofréquences.

## Revendications

1. Dispositif d'amplification de puissance d'un signal composite de télévision comprenant au moins un signal porteur à la fréquence d'émission modulé par une information vidéofréquence, caractérisé en ce qu'il comporte une entrée (10) de signal porteur modulé, une entrée (11) de signal porteur non modulé, des premiers moyens de génération (14, $A_1$, $P_1$) couplés à l'entrée de signal modulé (10) et à l'entrée de signal non modulé (11) délivrant sur une sortie (2) un signal porteur modulé à niveau réduit, des seconds moyens de génération ($A_2$, $P_2$) couplés à l'entrée de signal porteur non modulé (11) ayant une sortie délivrant le signal porteur pur, des moyens d'amplification comportant un premier amplificateur (12) ayant une entrée couplée à la sortie (2) des premiers moyens de génération et un deuxième amplificateur (13) ayant une entrée couplée à la sortie des seconds moyens de génération, pour amplifier séparemment le signal porteur modulé à niveau réduit et le signal porteur pur, et des moyens de combinaison (16) ayant deux entrées reliées aux sorties (7 et 8) des amplificateurs et une sortie pour fournir le signal porteur modulé amplifié à émettre.

2. Dispositif selon la revendication 1, caractérisé en ce qu'il comporte un circuit de filtrage (31, 33, 33) du signal porteur pur, ayant une entrée couplée à l'entrée de signal modulé (10) et une sortie reliée à l'entrée de signal non modulé (11), en ce que les premiers et les seconds moyens de génération sont couplés à l'entrée de signal non modulé (11) par un dispositif de couplage (15) à deux sorties (4, 5) les premiers moyens de génération comportant un circuit soustracteur (14) ayant une première entrée reliée à l'entrée de porteur modulé (10) et une seconde entrée reliée à la première sortie (4) du dispositif de couplage par un premier circuit de réglage ($A_1$, $P_1$), les seconds moyens de génération formant un second circuit de réglage ($A_2$, $P_2$), et en ce que le circuit de combinaison (16) est un circuit sommateur.

3. Dispositif d'amplification selon la revendication 2, caractérisé en ce que le premier et le deuxième amplificateur (12 et 13) appartiennent respectivement aux classes AB et C et ont un même gain nominal, en ce que le premier circuit de réglage comporte un premier atténuateur variable ($A_1$) en série avec un premier déphaseur variable ($P_1$), et en ce que le second circuit de réglage comporte un deuxième atténuateur variable ($A_2$) en série avec un deuxième déphaseur variable ($P_2$), le premier déphaseur et le premier atténuateur étant ajustés de manière à obtenir en sortie du circuit soustracteur respectivement une opposition de phase, à quelque degrés près, des signaux porteurs pur et modulé, et une égalité de niveau de modulation pour le noir et le blanc absolus, et le second déphaseur et le second atténuateur étant ajustés pour obtenir respectivement, en sortie du circuit sommateur de sortie (16) une mise en phase des signaux de sortie des premier et deuxième amplificateurs et un niveau relatif de signal porteur identique à celui du signal appliqué à l'entrée du dispositif.

4. Dispositif d'amplification selon la revendication 3, caractérisé en ce que le circuit soustracteur (14), le dispositif de couplage (15), et le circuit sommateur (16) sont des coupleurs hybrides 3 dB à 90°, le circuit de filtrage comportant un filtre de bande étroite (32), précédé et suivi d'un convertisseur de fréquence (31 et 33).

5. Dispositif d'amplification selon l'une des revendications 2 à 4 destiné à recevoir un signal de télévision composite comportant en outre un signal porteur audio modulé par une information audiofréquence, caractérisé en ce qu'il comporte un troisième amplificateur (18) amplifiant le signal porteur audio, et dont la sortie est connectée à une première entrée d'un second circuit sommateur (17), la sortie du deuxième amplificateur (13) étant couplée à la deuxième entrée du sommateur de sortie (16) à travers la deuxième entrée et la sortie du second circuit sommateur (17).

**Patentansprüche**

1. Leistungsverstärkungsanordnung für eine BAS-Signal mit wenigstens einem die Sendefrequenz aufweisenden Trägersignal, das durch eine Videofrequenzinformation moduliert ist, gekennzeichnet durch einen Eingang (10) für das modulierte Trägersignal, einen Eingang (11) für das nicht modulierte Trägersignal, erste Generatorvorrichtungen (14, $A_1$, $P_1$), die an den Eingang (10) für das modulierte Trägersignal und an den Eingang (11) für das nicht modulierte Trägersignal angeschlossen sind und an einem Ausgang (2) ein moduliertes Trägersignal mit reduziertem Pegel abgeben, zweite Generatorvorrichtungen ($A_2$, $P_2$), die an den Eingang (11) für das nicht modulierte Trägersignal angeschlossen sind und einen Ausgang aufweisen, der das reine Trägersignal abgibt, Verstärkungsvorrichtungen mit einem ersten Verstärker (12), der einen mit dem Ausgang (2) der ersten Generatorvorrichtungen verbundenen Eingang aufweist, und mit einem zweiten Verstärker (13), der einen mit dem Ausgang der zweiten Generatorvorrichtungen verbundenen Eingang aufweist, wobei die Verstärkungsvorrichtungen das modulierte Trägersignal mit reduziertem Pegel und das reine Trägersignal getrennt verstärken, und Kombinationsvorrichtungen (16), die zwei mit den Ausgängen (7, 8) der Verstärker verbundene Eingänge sowie einen Ausgang zur Abgabe des verstärkten zu sendenden modulierten Trägersignals aufweisen.

2. Anordnung nach Anspruch 1, dadurch gekennzeichnet, daß eine Filterschaltung (31, 32, 33) für das reine Trägersignal vorgesehen ist, die einen mit dem Eingang (10) für den modulierten Träger verbundenen Eingang und einen mit dem Eingang (11) für den nicht modulierten Träger verbundenen Ausgang aufweist, daß die ersten und zweiten Generatorvorrichtungen mit dem Eingang (11) für den nicht modulierten Träger über eine zwei Ausgänge (4, 5) aufweisende Kopplungsvorrichtung (15) verbunden sind, daß die ersten Generatorvorrichtungen eine Subtraktionsschaltung (14) enthalten, die einen ersten, mit dem Eingang (10) für den modulierten Träger verbundenen Eingang sowie einen zweiten Eingang aufweisen, der mit dem ersten Ausgang (4) der Kopplungsvorrichtung über eine erste Regelschaltung ($A_1$, $P_1$) verbunden ist, daß die zweiten Generatorvorrichtungen eine zweite Regelschaltung ($A_2$, $P_2$) bilden und daß die Kombinationsschaltung (16) eine Additionsschaltung ist.

3. Anordnung nach Anspruch 2, dadurch gekennzeichnet, daß der erste und der zweite Verstärker (12 und 13) Verstärker der Klassen AB bzw. C sind und die gleiche Nennverstärkung haben, daß die erste Regelschaltung ein variables Dämpfungsglied ($A_1$) enthält, das mit einem ersten variablen Phasenschieber ($P_1$) in Serie geschaltet ist, daß die zweite Regelschaltung ein zweites variables Dämpfungsglied ($A_2$) enthält, das mit einem zweiten variablen Phasenschieber ($P_2$) in Serie geschaltet ist, daß der erste Phasenschieber und das erste Dämpfungsglied so eingestellt sind, daß am Ausgang der Subtraktionsschaltung bis auf einige Grade eine Gegenphasigkeit des reinen und des modulierten Trägersignals sowie eine Gleichheit der Modulationspegel für die absoluten Schwarz- und Weißwerte erhalten werden, und daß der zweite Phasenschieber und das zweite Dämpfungsglied so eingestellt sind, daß am Ausgang der Additionsschaltung (16) eine Phasengleichheit der Ausgangssignale der beiden Verstärker sowie ein mit dem Pegel des an den Eingang der Anordnung angelegten Signals übereinstimmender relativer Trägersignalpegel erhalten werden.

4. Anordnung nach Anspruch 3, dadurch gekennzeichnet, daß die Subtraktionsschaltung (14), die Kopplungsvorrichtung (15) und die Additionsschaltung (16) 90°—3 dB-Hybridkoppler sind und daß die Filterschaltung ein schmalbandiges Filter (32) enthält, dem jeweils ein Frequenzumsetzer (31, 33) vor- und nachgeschaltet ist.

5. Anordnung nach einem der Ansprüche 2 bis 4 für den Empfang eines BAS-Signals, das einen mit einer Tonfrequenzinformation modulierten Tonsignalträger enthält, gekennzeichnet durch einen dritten Verstärker (18), der den Tonsignalträger verstärkt und dessen Ausgang mit einem ersten Eingang einer zweiten Additionsschaltung (17) verbunden ist, wobei der Ausgang des zweiten Verstärkers (13) mit dem zweiten Eingang der Additionsschaltung (16) über den zweiten Eingang und den Ausgang der zweiten Additionsschaltung (17) verbunden ist.

## Claims

1. Power amplifier arrangement for a composite television signal including at least a carrier signal having the transmitter frequency, said carrier signal being modulated by a video frequency information, characterized by an input (10) for the modulated carrier signal, an input (11) for the unmodulated carrier signal, first generator means (14, $A_1$, $P_1$) connected to the input (10) for the modulated carrier signal and to the input (11) for the unmodulated carrier signal and having an output (2) for delivering a modulated carrier signal of reduced level, second generator means ($A_2$, $P_2$) connected to the input (11) for the unmodulated carrier signal and having an output delivering the pure carrier signal, amplification means comprising a first amplifier (12) having an input connected to the output (2) of the first generator means and a second amplifier (13) having an input connected to the output of the second generator means, said amplification means amplifying the modulated carrier signal of reduced level and the pure carrier signal separately, and combination means (16) having two inputs connected to the outputs (7, 8) of the amplifiers and further having an output for delivering the amplified modulated carrier signal to be transmitted.

2. Arrangement according to claim 1, characterized in that a filter circuit (31, 32, 33) is provided for the pure carrier signal, said filter circuit having an input connected to the input (10) for the modulated carrier and an output connected to the input (11) for the unmodulated carrier, that the first and second generator means are connected to the input (11) for the unmodulated carrier via coupling means (15) having two outputs (4, 5), that the first generator means comprise a subtraction circuit (14) having a first input connected to the input (10) for the modulated carrier and a second input connected to the first output (4) of the coupling means via a first regulating circuit ($A_1$, $P_1$), that the second generator means form a second regulating circuit ($A_2$, $P_2$) and that the combination circuit (16) is an addition circuit.

3. Arrangement according to claim 2, characterized in that the first and second amplifiers (12 and 13) are class AB and class C amplifiers, respectively, having the same rated gain, that the first regulation circuit comprises a variable attenuator ($A_1$) connected in series with a first variable phase shifter ($P_1$, that the second regulation circuit comprises a second variable attenuator ($A_2$) connected in series with a second variable phase shifter ($P_2$), that the first phase shifter and the first attenuator are adjusted in such a manner that at the output of the subtraction circuit up to some degrees phase opposition of the pure carrier signal and the modulated carrier signal as well as equal modulation levels for the absolute black and white levels are obtained, and that the second phase shifter and the second attenuator are adjusted in such a manner that at the output of the addition circuit (16) phase equality of the output signals of both amplifiers as well a relative carrier level equal to the level of the signal applied to the arrangement are obtained.

4. Arrangement according to claim 3, characterized in that the subtraction circuit (14), the coupling means (15) and the addition circuit (16) are 90°— 3 dB-hybride-couplers and that the filter circuit comprises a filter (32) having a narrow band width, a frequency converter (31, 33) being connected ahead and behind of said filter.

5. Arrangement according to any of claims 2 to 4 for receiving a composite television signal containing an audio signal carrier modulated with an audio frequency information, characterized by a third amplifier (18) amplifying the audio signal carrier and having an output connected to the first input of a second addition circuit (17), the output of said second amplifier (13) being connected to the second input of the addition circuit (16) via the second input and the output of the second addition circuit (17).

FIG_1

FIG_2

FIG_3